# EUROPÄISCHE PATENTANMELDUNG

(11) **EP 4 461 112 A1**
(43) Veröffentlichungstag der Anmeldung: **13.11.2024**
(21) Anmeldenummer: 24173076.1
(22) Anmeldetag: 29.04.2024
(51) Int. Cl.: A01C 7/08, A01C 15/04

(54) **PNEUMATISCHE VERTEILMASCHINE UND VERFAHREN ZUR STEUERUNG DEREN DOSIEREINHEITEN**

(30) Priorität: 08.05.2023 DE 102023111965
(71) Anmelder: RAUCH Landmaschinenfabrik GmbH, 77836 Rheinmünster (DE)
(72) Erfinder: Herberg, Michael, 76534 Baden-Baden (DE); Gruber, Thomas Konrad, 86929 Penzing-Untermühlhausen (DE); Stöcklin, Volker, 77975 Ringsheim (DE)
(74) Vertreter: Lichti - Patentanwälte Partnerschaft mbB

(57) **Zusammenfassung**

Es wird eine pneumatische Verteilmaschine zum Ausbringen von Verteilgut sowie ein Verfahren zur Steuerung deren Dosiereinheiten vorgeschlagen, welche je ein unabhängig voneinander steuer- oder regelbar drehangetriebenes Dosierrad umfassen und je ein Verteilorgan mit Verteilgut versorgen. Eine Steuerung is dazu eingerichtet, dass während der Fahrt der Verteilmaschine (M) entlang einer Feldfahrgasse (F) auf ein unter einem Winkel von ungleich 90° in Bezug auf diese Feldfahrgasse angeordnetes Vorgewende (V) zu bzw. von diesem fort die Drehzahl des Dosierrades einer jeweiligen Dosiereinheit, welche dem Verteilorgan einer jeweiligen Teilbreite (TM) zugeordnet ist, sukzessive zwischen der Soll-Drehzahl und null vermindert bzw. erhöht wird, wobei die sukzessive Verminderung bzw. Erhöhung der Drehzahl des jeweiligen Dosierrades der jeweiligen Dosiereinheit frühestens begonnen wird, wenn eine jeweilige Teilbreite die Grenze (G) des Vorgewendes zum Feldinneren hin bzw. zumindest die Grenze (G1) zwischen den beiden feldinneren Teilbreiten des Vorgewendes erreicht, und spätestens beendet wird, wenn eine jeweilige Teilbreite zumindest die Grenze zwischen den beiden feldinneren Teilbreiten (TV1) des Vorgewendes bzw. die Grenze des Vorgewendes zum Feldinneren überschreitet, so dass eine möglichst gleichmäßige Verteilung an Verteilgut im Übergang des Feldinneren zum Vorgewende hin erreicht wird.

## Beschreibung

Die Erfindung betrifft eine pneumatische Verteilmaschine zum Ausbringen von Verteilgut umfassend:
- wenigstens einen Behälter zur Bevorratung des Verteilgutes,
- eine Mehrzahl an dem Behälter nachgeordneten Dosiereinheiten mit je wenigstens einem unabhängig voneinander steuer- und/oder regelbar drehangetriebenen Dosierrad zur Dosierung des Verteilgutes,
- eine Mehrzahl an einem jeweiligen Dosierrad der Dosiereinheiten nachgeordneten Übergabekammern, welche einerseits mit wenigstens einem Gebläse in Verbindung stehen und welche andererseits in je wenigstens eine Förderleitung münden, um das von einem jeweiligen Dosierrad der Dosiereinheiten dosierte Verteilgut pneumatisch an je ein Verteilorgan oder an je eine Gruppe von Verteilorganen zu überführen, welche mit unterschiedlichem seitlichem Abstand von der Längsachse der Verteilmaschine angeordnet sind, und
- eine Steuer- und/oder Regeleinrichtung zur Steuerung und/oder Regelung der Drehzahl der Dosierräder der Dosiereinheiten in Abhängigkeit wenigstens eines Parameters aus der Gruppe Fahrgeschwindigkeit der Verteilmaschine, Soll-Verteilmenge pro Flächeneinheit und Arbeitsbreite auf eine der gewünschten Soll-Verteilmenge pro Flächeneinheit entsprechende Soll-Drehzahl, wobei die jeweiligen Verteilorgane oder die jeweiligen Gruppen von Verteilorganen durch Rotieren bzw. Stillsetzen des jeweiligen Dosierrades einer jeweiligen Dosiereinheit zu- bzw. abschaltbar sind, um für eine Teilbreitenschaltung mit einer Mehrzahl an Teilbreiten der Verteilmaschine zu sorgen.

Die Erfindung bezieht sich ferner auf ein Verfahren zur Steuerung und/oder Regelung der Dosiereinheiten einer solchen pneumatischen Verteilmaschine zum Ausbringen von Verteilgut entsprechend einer vorgegebenen Verteilmenge an Verteilgut pro Flächeneinheit, wobei die pneumatische Verteilmaschine entlang von Feldfahrgassen bewegt wird und die jeweiligen Verteilorgane oder die jeweiligen Gruppen von Verteilorganen durch Rotieren bzw. Stillsetzen des jeweiligen Dosierrades einer jeweiligen Dosiereinheit zu- bzw. abgeschaltet werden, um für eine Teilbreitenschaltung mit einer Mehrzahl an Teilbreiten der Verteilmaschine zu sorgen, wenn die pneumatische Verteilmaschine entlang einer jeweiligen Feldfahrgasse auf ein Vorgewende zu und/oder von einem Vorgewende fort fährt.

Derartige pneumatische Verteilmaschinen sind insbesondere in Form von pneumatischen Düngerstreuern und/oder Sämaschinen zum Ausbringen von pulver- bzw. partikelförmigem Verteilgut, wie Dünger, Saatgut und dergleichen, in verschiedener Ausgestaltung bekannt und umfassen üblicherweise einen Behälter zur Bevorratung des Verteilgutes, unterhalb dessen eine Mehrzahl an Dosiereinheiten angeordnet ist. Während als Dosiereinheiten auch mit einer Auslauföffnung des Vorratsbehälters zusammenwirkende, aktuatorisch oder manuell betätigte Dosierschieber zum Einsatz gelangen können, weisen die Dosiereinheiten bei den hier in Frage stehenden pneumatischen Verteilmaschinen in der Regel jeweils wenigstens ein Dosierrad auf, wobei die Dosierräder der Dosiereinheiten unabhängig voneinander steuer- und/oder regelbar drehangetrieben sind. Die Dosierräder können beispielsweise in Form von Zellenrad- und/oder Nockenradwalzen ausgestaltet sein, wobei sie in der Regel in einem Dosiergehäuse gelagert sind, welches üblicherweise einen an seiner Oberseite angeordneten, beispielsweise mit einer Auslauföffnung des Behälters in Verbindung stehenden Einlass und eine an seiner Unterseite angeordneten Auslass aufweist (vgl. z.B. die EP 2 786 649 A2).

Gattungsgemäße pneumatische Verteilmaschinen können einerseits in leichter Bauart als Anbaugeräte konzipiert sein, welche mit dem Dreipunkt einer Zugmaschine, wie eines Traktors, gekoppelt werden können, anderseits können sie in schwerer Bauart auf einen achsgestützten Nachläufer oder einen Selbstfahrer aufgesetzt sein. Sie umfassen üblicherweise seitlich nach außen ragende Ausleger, welche in unterschiedlichem seitlichem Abstand voneinander endende Förderleitungen aufnehmen. Zur Förderung des Verteilgutes dient ein Gebläse, dessen Druckleitung sich an einen Auslass des Dosiergehäuses einer jeweiligen Dosiereinheit anschließt und in einem Druckverteiler mündet, an welchen sich die Förderleitungen anschließen. Zwischen dem Druckverteiler und den Förderleitungen angeordnete Übergabekammern, welche zweckmäßigerweise mit jeweils eine Düse und einen Diffusor umfassenden Injektoren ausgestattet sein können, dienen zur Übergabe des Verteilgutes von dem Dosierrad einer jeweiligen Dosiereinheit an die Förderleitungen, um sicherzustellen, dass jeder Förderleitung die gewünschte Menge an Verteilgut aufgegeben wird. Das Verteilgut wird schließlich pneumatisch über die nach außen umgelenkten Förderleitungen bis zu deren Ende gefördert, wo das Verteilgut an entsprechende Verteilorgane überführt wird. Letztere sind in der Regel in Form von Prallorganen, wie z.B. nach Art von Prallplatten oder Pralltellern, ausgestaltet, auf welche das in einer jeweiligen Förderleitung pneumatisch transportierte Verteilgut auftrifft und von dort im Wesentlichen fächerförmig auf dem Boden abgelegt wird. Die sich senkrecht zur Fahrtrichtung der pneumatischen Verteilmaschine erstreckende Breite eines jeweiligen Streufächers, welcher mittels eines jeweiligen Verteilorgans auf dem Boden abgelegt wird, entspricht in der Regel etwa dem Doppelten des seitlichen Abstandes der Verteilorgane, also etwa dem Doppelten einer Teilbreite, sofern das einem jeden Verteilorgan zugeordnete Dosierrad einer jeweiligen Dosiereinheit einzeln zu- bzw. abschaltbar ist. Infolge der Überlappung der einzelnen Streufächer der einzelnen Verteilorgane wird eine gleichmäßige Querverteilung des Verteilgutes über die gesamte Arbeitsbreite erreicht.

Eine derartige pneumatische Verteilmaschine ist in Form eines pneumatischen Düngerstreuers beispielsweise aus der DE 10 2004 030 240 A1 bekannt, welche hiermit ausdrücklich zum Gegenstand der vorliegenden Offenbarung gemacht wird. Die bekannte pneumatische Verteilmaschine weist dabei eine Mehrzahl an Dosiereinheiten auf, welche jeweils ein unabhängig voneinander drehangetriebenes Dosierrad umfassen, an dessen Dosiergehäuse sich auslassseitig wiederum mehrere, mittels Gebläse druckbeaufschlagte Übergabekammern anschließen, von welchen gruppenweise mehrere Förderleitungen abgehen, welche in je einem Verteilorgan münden. Eine Teilbreitenschaltung ist dadurch gewährleistet, dass jeder Dosiereinheit ein eigener, unabhängig voneinander drehzahlgesteuerter Motor zum Antrieb seines jeweiligen Dosierrades zugeordnet ist, so dass nebeneinander angeordnete Verteilorgane, welche von den jeweiligen Gruppen an Förderleitungen mit Verteilgut versorgt sind, die von einer jeweiligen Dosiereinheit ausgehen, gruppenweise zu- bzw. abgeschaltet werden können. Ferner lassen sich durch sukzessives Einschalten bzw. Ausschalten der Dosiereinheiten derart, dass zunächst die mit den äußeren Verteilorganen in Verbindung stehenden Dosiereinheiten eingeschaltet werden und sodann erst die weiter inneren bzw. dass zunächst die mit den äu-βeren Verteilorganen in Verbindung stehenden Dosiereinheiten abgeschaltet werden und sodann erst die weiter inneren, die zum pneumatischen Transport des Verteilgutes durch die verschieden langen Förderleitungen erforderlichen unterschiedlichen Transportzeiten kompensieren, so dass der Verteilvorgang am Anfang des Feldes gleichmäßig begonnen bzw. am Ende des Feldes gleichmäßig beendet werden kann. Darüber hinaus ist es durch Antrieb der Dosierräder der Dosiereinheiten mit unterschiedlichen Drehgeschwindigkeiten auch möglich, verschiedenen Feldbereichen mit unterschiedlichem Versorgungsbedarf an Verteilgut innerhalb der gesamten Arbeitsbreite Rechnung zu tragen oder bei der Kurvenfahrt andernfalls im Kurveninneren entstehende Überversorgungen bzw. im Kurvenäußeren entstehende Unterversorgungen zu kompensieren. Auf diese Weise lässt sich folglich eine, wenngleich relativ grobe, Teilbreitenschaltung realisieren, indem die unabhängig voneinander drehangetrieben Dosierräder der Dosiereinheiten jeweils mit Gruppen von Verteilorganen kommunizieren.

Darüber hinaus beschreibt die WO 2018/219489 A1, welche hiermit gleichfalls explizit zum Gegenstand der vorliegenden Offenbarung gemacht wird, eine weitere gattungsgemäße pneumatische Verteilmaschine mit demgegenüber weiterentwickelten Dosiereinheiten, welche jeweils ein unabhängig voneinander drehangetriebenes Dosierradsegment aufweisen, wobei die Dosierradsegmente auf einem gemeinsamen Hohlkörper drehbar gelagert sind und mittels im Innern des Hohlkörpers montierten Antrieben unabhängig voneinander drehzahlsteuer- bzw. -regelbar sind. Einem jeden Dosierradsegment einer jeweiligen Dosiereinheit ist in diesem Fall jeweils eine Übergabekammer nachgeordnet, an welche sich jeweils eine zu einem jeweiligen Verteilorgan führende Förderleitung anschließt. Auf diese Weise ist eine noch feinere Teilbreitenschaltung sowie eine individuelle Versorgung jedes Verteilorgans mit dem gewünschten Massenstrom an Verteilgut möglich, indem einzelne Dosierradsegmente in Abhängigkeit der gewünschten Soll-Verteilmenge pro Flächeneinheit beschleunigt, verlangsamt oder gänzlich stillgesetzt werden.

Während des Betriebs gattungsgemäßer pneumatischer Verteilmaschinen wird die Verteilmaschine üblicherweise entlang von Feldfahrgassen über das zu bestellende Feld bewegt, welche sich parallel zueinander unter einem Abstand voneinander erstrecken, welche der Arbeitsbreite der Verteilmaschine entspricht, um das Verteilgut mit der jeweils vorgesehenen Verteilmenge pro Flächeneinheit gleichmäßig auf dem Feld auszubringen. Zuvor oder hernach wird entlang der Feldgrenze zum Feldinneren hin das sogenannte Vorgewende angelegt, anlässlich dessen die pneumatische Verteilmaschine das Feld entlang seiner sich um dessen Umfang erstreckenden Vorgewendefahrgasse umfährt, um das Verteilgut gleichmäßig entlang dem Randbereich des Feldes auszubringen. Sofern während des Fahrens der pneumatischen Verteilmaschine entlang der Feldfahrgassen einzelne Teilbreiten abgeschaltet werden müssen, wie es z.B. der Fall ist, wenn sich die Verteilmaschine dem Vorgewende nähert oder auch an Hindernissen auf dem Feld, wie Bäumen, Büschen, Uferbereichen von Gewässern oder dergleichen, vorbeifährt, so werden die den Verteilorganen der jeweiligen Teilbreiten zugeordneten Dosiereinheiten - oder genauer: deren Dosierräder - stillgesetzt. In entsprechender Weise werden die einzelnen Teilbreiten wieder zugeschaltet, wenn die pneumatische Verteilmaschine z.B. wieder von dem Vorgewende fort in Richtung des Feldinneren fährt oder ein Hindernis auf dem Feld passiert hat, indem die den Verteilorganen der jeweiligen Teilbreite zugeordneten Dosiereinheiten - oder genauer: deren Dosierräder - wieder mit der Soll-Drehzahl rotiert werden, welche mit der jeweils vorgesehenen Verteilmenge pro Flächeneinheit korrespondiert.

Sofern sich das Vorgewende oder z.B. auch Hindernisse auf dem Feld, wie solche der vorgenannten Art, im Wesentlichen senkrecht zur Fahrtrichtung der pneumatischen Verteilmaschine bzw. senkrecht zu einer auf dem Feld angelegten Feldfahrgasse erstrecken, entlang welcher sich die Verteilmaschine bewegt, so kann durch das Zu- bzw. Abschalten der den Verteilorganen der jeweiligen Teilbreiten zugeordneten Dosiereinheiten in präziser Weise erreicht werden, dass in dem zu versorgenden Feldbereich die vorgesehene Soll-Verteilmenge pro Flächeneinheit ausgebracht wird, ohne dass eine lokale Unter- bzw. Überversorgung entsteht und ohne dass Verteilgut auf Bereiche jenseits der Feldbereiche gelangt, auf denen das Verteilgut ausgebracht werden soll. Die Zu- bzw. Abschaltvorgänge können dabei beispielsweise in Abhängigkeit der Position der pneumatischen Verteilmaschine auf dem Feld gesteuert werden, sofern die Verteilmaschine über eine Positionserfassungseinrichtung, wie einen GPS-Empfänger, verfügt.

Als problematisch erweist sich die Zu- bzw. Abschaltung einzelner Teilbreiten allerdings dann, wenn sich die Fahrtrichtung der pneumatischen Verteilmaschine bzw. eine auf dem Feld angelegte Feldfahrgasse unter einem Winkel von ungleich etwa 90° in Bezug auf das Vorgewende oder z.B. auch auf ein Hindernis auf dem Feld erstreckt. Handelt es sich hierbei um ein solches Hindernis, auf welchem ein Ausbringen von Verteilgut sicher vermieden werden muss, wie beispielsweise um den Uferbereich eines Gewässers, so müssen die Schaltpunkte der einzelnen Teilbreiten derart gewählt werden, dass bei der Zufahrt auf das Hindernis eine jeweilige Teilbreite "früh" abgeschaltet wird, sobald eine jeweilige Teilbreite an einem äußeren Punkt derselben das Hindernis erreicht hat, wohingegen eine jeweilige Teilbreite bei der Fortfahrt von dem Hindernis "spät" zugeschaltet werden muss, sobald eine jeweilige Teilbreite das Hindernis gänzlich überfahren hat.

Sofern sich die Fahrtrichtung der pneumatischen Verteilmaschine bzw. eine auf dem Feld angelegte Feldfahrgasse unter einem Winkel von ungleich etwa 90° (sowie ungleich 0°) in Bezug auf das Vorgewende erstreckt, so führen solche Schaltpunkte der den jeweiligen Teilbreiten zugeordneten Dosiereinheiten bei der Zufahrt auf das Vorgewende bzw. bei der Fortfahrt von dem Vorgewende zu einer Vielzahl an dreieckförmigen Feldbereichen einer Unterversorgung an Verteilgut, welche sich von der Grenze des Vorgewendes zum Feldinneren in Richtung des Feldinneren erstrecken und deren Hypotenuse mit der Grenze des Vorgewendes zusammenfällt, während deren Katheten einerseits von einer jeweiligen Teilbreite (bei der Fahrt entlang der Feldfahrgasse) und andererseits von einer Parallelen zur Fahrtrichtung der Verteilmaschine bzw. zur jeweiligen Feldfahrgasse gebildet sind. Werden die Schaltpunkte der den jeweiligen Teilbreiten zugeordneten Dosiereinheiten hingegen derart gewählt, dass bei der Zufahrt auf das Vorgewende entlang der Feldfahrgasse eine jeweilige Teilbreite "spät" abgeschaltet wird, sobald eine jeweilige Teilbreite die Grenze des Vorgewendes zum Feldinneren gänzlich überschreitet, wohingegen eine jeweilige Teilbreite bei der Fortfahrt von dem Vorgewende "früh" zugeschaltet wird, sobald eine jeweilige Teilbreite an einem äußeren Punkt derselben die Grenze des Vorgewendes zum Feldinneren erreicht hat, so führen solche Schaltpunkte der den jeweiligen Teilbreiten zugeordneten Dosiereinheiten zu einer Vielzahl an dreieckförmigen Feldbereichen einer Überversorgung an Verteilgut, welche sich von der Grenze des Vorgewendes zum Feldinneren in Richtung des Vorgewendes erstrecken und deren Hypotenuse wiederum mit der Grenze des Vorgewendes zusammenfällt, während deren Katheten einerseits von einer jeweiligen Teilbreite (bei der Fahrt entlang der Feldfahrgasse) und andererseits von einer Parallelen zur Fahrtrichtung der Verteilmaschine bzw. zur jeweiligen Feldfahrgasse gebildet sind. Die vorgenannten Feldbereiche der Über- bzw. der Unterversorgung sind dabei um so größer, je spitzer der Winkel ist, unter welchem sich die Feldfahrgasse in Bezug zu der Grenze des Vorgewendes zum Feldinneren erstreckt.

In der Praxis werden die Schaltpunkte der den jeweiligen Teilbreiten zugeordneten Dosiereinheiten oft derart gewählt, dass ein "Mittelweg" zwischen den beiden obigen Alternativen gegeben ist, d.h. die Ab- bzw. Zuschaltung der Dosiereinheiten erfolgt dann, wenn sich eine jeweilige Teilbreite etwa hälftig im Feldinneren und hälftig im Vorgewende befindet. Auf diese Weise wird z.B. im Falle einer Verteilmaschine in Form eines pneumatischen Düngerstreuers eine teilweise Überlappung der Streufächer der einzelnen Verteilorgane erreicht, welche einerseits während des Fahrens entlang der Vorgewendefahrgasse, andererseits während des Fahrens entlang der Feldfahrgassen ausgebracht worden sind, doch führt dies einerseits zu etwa dreieckförmigen Feldbereichen einer Überversorgung an Verteilgut (nämlich im Vorgewende an dessen Grenze zum Feldinneren hin, wo sich diese Streufächer überlappen), andererseits zu hierzu komplementären, etwa dreieckförmigen Feldbereichen einer Unterversorgung an Verteilgut (nämlich im Feldinneren an dessen Grenze zum Vorgewende hin, wo sich diese Streufächer nicht überlappen). Indes sollte einerseits eine Überversorgung des Bodens sowohl aus Kosten- als auch insbesondere aus Umweltgründen, andererseits eine Unterversorgung des Bodens aus Ertragsgründen so weit wie möglich vermieden werden bzw. sollten Feldbereiche, in welchen sich dies nicht gänzlich vermeiden lässt, so klein wie möglich gehalten werden.

Der Erfindung liegt die Aufgabe zugrunde, eine pneumatische Verteilmaschine sowie ein Verfahren zur Steuerung und/oder Regelung deren Dosiereinheiten der eingangs genannten Art auf einfache und kostengünstige Weise dahingehend weiterzubilden, dass bei der Zu- bzw. Abschaltung der den einzelnen Teilbreiten zugeordneten Dosiereinheiten während der Fahrt der Verteilmaschine entlang einer Feldfahrgasse auf ein demgegenüber unter einem Winkel von ungleich 0° und ungleich 90° angeordnetes Vorgewende zu bzw. von diesem fort eine gegenüber dem Stand der Technik gleichmä-βigere Verteilung an Verteilgut erreicht wird.

Erfindungsgemäß wird diese Aufgabe bei einer pneumatischen Verteilmaschine der eingangs genannten Art dadurch gelöst, dass während der Fahrt der pneumatischen Verteilmaschine
(a) entlang einer Feldfahrgasse im Feldinneren auf ein unter einem Winkel von ungleich 0° und ungleich 90° in Bezug auf diese Feldfahrgasse angeordnetes Vorgewende zu
   die Steuer- und/oder Regeleinrichtung zum sukzessiven Vermindern der Drehzahl eines jeweiligen Dosierrades einer jeweiligen Dosiereinheit, welche dem Verteilorgan oder der Gruppe von Verteilorganen einer jeweiligen Teilbreite der Verteilmaschine zugeordnet ist, zwischen der Soll-Drehzahl und null eingerichtet ist, wobei die sukzessive Verminderung der Drehzahl des jeweiligen Dosierrades der jeweiligen Dosiereinheit unter Berücksichtigung der Latenzzeit, innerhalb welcher das Verteilgut von dem jeweiligen Dosierrad an das jeweilige Verteilorgan überführt wird, frühestens beginnt, wenn eine jeweilige Teilbreite der Verteilmaschine die Grenze des Vorgewendes zum Feldinneren hin erreicht, und spätestens endet, wenn eine jeweilige Teilbreite der Verteilmaschine zumindest die Grenze zwischen der feldinneren Teilbreite und der sich hieran in Richtung des Feldäußeren anschließenden Teilbreite des Vorgewendes gänzlich überschreitet; und/oder
(b) entlang einer Feldfahrgasse von einem unter einem Winkel von ungleich 0° und ungleich 90° in Bezug auf diese Feldfahrgasse angeordneten Vorgewende fort
   die Steuer- und/oder Regeleinrichtung zum sukzessiven Erhöhen der Drehzahl eines jeweiligen Dosierrades einer jeweiligen Dosiereinheit, welche dem Verteilorgan oder der Gruppe von Verteilorganen einer jeweiligen Teilbreite der Verteilmaschine zugeordnet ist, zwischen null und der Soll-Drehzahl eingerichtet ist, wobei die sukzessive Erhöhung der Drehzahl des jeweiligen Dosierrades der jeweiligen Dosiereinheit unter Berücksichtigung der Latenzzeit, innerhalb welcher das Verteilgut von dem jeweiligen Dosierrad an das jeweilige Verteilorgan überführt wird, frühestens beginnt, wenn eine jeweilige Teilbreite der Verteilmaschine zumindest die Grenze zwischen der feldinneren Teilbreite und der sich hieran in Richtung des Feldäußeren anschließenden Teilbreite des Vorgewendes erreicht, und spätestens endet, wenn eine jeweilige Teilbreite der Verteilmaschine die Grenze des Vorgewendes zum Feldinneren gänzlich überschreitet.

In verfahrenstechnischer Hinsicht sieht die Erfindung zur Lösung dieser Aufgabe bei einem Verfahren zur Steuerung und/oder Regelung der Dosiereinheiten einer pneumatischen Verteilmaschine der eingangs genannten Art ferner vor, dass während der Fahrt der pneumatischen Verteilmaschine
(a) entlang einer Feldfahrgasse im Feldinneren auf ein unter einem Winkel von ungleich 0° und ungleich 90° in Bezug auf diese Feldfahrgasse angeordnetes Vorgewende zu
   die Drehzahl eines jeweiligen Dosierrades einer jeweiligen Dosiereinheit, welche dem Verteilorgan oder der Gruppe von Verteilorganen einer jeweiligen Teilbreite der Verteilmaschine zugeordnet ist, sukzessive zwischen der Soll-Drehzahl und null vermindert wird, wobei die sukzessive Verminderung der Drehzahl des jeweiligen Dosierrades der jeweiligen Dosiereinheit unter Berücksichtigung der Latenzzeit, innerhalb welcher das Verteilgut von dem jeweiligen Dosierrad an das jeweilige Verteilorgan überführt wird, frühestens begonnen wird, wenn eine jeweilige Teilbreite der Verteilmaschine die Grenze des Vorgewendes zum Feldinneren hin erreicht, und spätestens beendet wird, wenn eine jeweilige Teilbreite der Verteilmaschine zumindest die Grenze zwischen der feldinneren Teilbreite und der sich hieran in Richtung des Feldäußeren anschließenden Teilbreite des Vorgewendes gänzlich überschreitet; und/oder
(b) entlang einer Feldfahrgasse von einem unter einem Winkel von ungleich 0° und ungleich 90° in Bezug auf diese Feldfahrgasse angeordneten Vorgewende fort
   die Drehzahl eines jeweiligen Dosierrades einer jeweiligen Dosiereinheit, welche dem Verteilorgan oder der Gruppe von Verteilorganen einer jeweiligen Teilbreite zugeordnet ist, sukzessive zwischen null und der Soll-Drehzahl erhöht wird, wobei die sukzessive Erhöhung der Drehzahl des jeweiligen Dosierrades der jeweiligen Dosiereinheit unter Berücksichtigung der Latenzzeit, innerhalb welcher das Verteilgut von dem jeweiligen Dosierrad an das jeweilige Verteilorgan überführt wird, frühestens begonnen wird, wenn eine jeweilige Teilbreite der Verteilmaschine zumindest die Grenze zwischen der feldinneren Teilbreite und der sich hieran in Richtung des Feldäußeren anschließenden Teilbreite des Vorgewendes erreicht, und spätestens beendet wird, wenn eine jeweilige Teilbreite der Verteilmaschine die Grenze des Vorgewendes zum Feldinneren gänzlich überschreitet.

Die erfindungsgemäße Ausgestaltung sieht folglich entgegen dem Stand der Technik keine diskreten Schaltpunkte der den jeweiligen Teilbreiten der Verteilmaschine zugeordneten Dosiereinheiten vor, um deren Dosierräder entweder zu- oder abzuschalten, sondern wird die Drehzahl des einer jeweiligen Teilbreite der Verteilmaschine zugeordneten Dosierrades einer jeweiligen Dosiereinheit
- einerseits sukzessive von der Soll-Drehzahl auf null vermindert, zumindest so lange eine jeweilige Teilbreite der Verteilmaschine bei der Fahrt auf einer Feldfahrgasse vom Feldinneren auf das Vorgewende zu die in Bezug auf die Feldfahrgasse "schräge" Grenze des Vorgewendes zum Feldinneren schneidet,
- andererseits sukzessive von null auf die jeweilige Soll-Drehzahl erhöht, zumindest so lange eine jeweilige Teilbreite der Verteilmaschine bei der Fahrt auf einer Feldfahrgasse von dem Vorgewende fort in Richtung des Feldinneren die in Bezug auf die Feldfahrgasse "schräge" Grenze des Vorgewendes zum Feldinneren schneidet.
Auf diese Weise ergibt sich ein weitgehend gleichmäßiger Überlappungsbereich einerseits der beim Fahren entlang der Vorgewendefahrgasse angelegten Streufächer im Vorgewende, andererseits der beim Fahren entlang der Feldfahrgassen angelegten Streufächer im Feldinneren, bevor die Verteilmaschine im Bereich des Vorgewendes wendet bzw. nachdem die Verteilmaschine im Bereich des Vorgewendes gewendet hat. Da die Überführung des Verteilgutes von einem jeweiligen Dosierrad an ein jeweiliges Verteilorgan eine bestimmte Latenzzeit erfordert, welche von dem Abstand des jeweiligen Verteilorgans von dem Dosierorgan bzw. von der Länge der jeweiligen, die dem jeweiligen Dosierrad nachgeordnete Übergabekammer mit dem jeweiligen Verteilorgan verbindenden Förderleitung sowie von dem mittels des Gebläses erzeugten Förderluftstromes abhängig ist, wird die Drehzahl eines jeweiligen Dosierrades der Dosiereinheiten unter Berücksichtigung dieser jeweiligen Latenzzeit, d.h. entsprechend früher, zwischen seiner Soll-Drehzahl und null bzw. zwischen null und seiner Soll-Drehzahl sukzessive vermindert bzw. erhöht.

Während die sukzessive Verminderung bzw. Erhöhung der Drehzahl eines jeweiligen Dosierrades der jeweiligen Dosiereinheit zwischen der jeweiligen Soll-Drehzahl und null bzw. zwischen null und der jeweiligen Soll-Drehzahl grundsätzlich lediglich während des Überquerens der feldinneren Teilbreite des Vorgewendes vorgesehen sein kann, wenn sich die Verteilmaschine auf einer jeweiligen Feldfahrgasse auf das Vorgewende zu bzw. von diesem fort bewegt, kann gemäß vorteilhafter Weiterbildungen auch vorgesehen sein, dass die sukzessive Verminderung bzw. Erhöhung der Drehzahl eines jeweiligen Dosierrades der jeweiligen Dosiereinheit zwischen der jeweiligen Soll-Drehzahl und null bzw. zwischen null und der jeweiligen Soll-Drehzahl über einen längeren Zeitraum stattfindet, wie z.B. während des Überquerens der beiden feldinneren Teilbreiten, der drei feldinneren Teilbreiten oder mehreren (z.B. vier, fünf etc.) feldinneren Teilbreiten des Vorgewendes, wenn sich die Verteilmaschine auf einer jeweiligen Feldfahrgasse auf das Vorgewende zu bzw. von diesem fort bewegt. So kann gemäß einer Weiterbildung der erfindungsgemäßen pneumatischen Verteilmaschine beispielsweise vorgesehen sein, dass während der Fahrt der pneumatischen Verteilmaschine
(a) entlang einer Feldfahrgasse im Feldinneren auf ein unter einem Winkel von ungleich 0° und ungleich 90° in Bezug auf diese Feldfahrgasse angeordnetes Vorgewende zu
   die sukzessive Verminderung der Drehzahl des jeweiligen Dosierrades der jeweiligen Dosiereinheit unter Berücksichtigung der Latenzzeit, innerhalb welcher das Verteilgut von dem jeweiligen Dosierrad an das jeweilige Verteilorgan überführt wird, spätestens endet, wenn
   - eine jeweilige Teilbreite der Verteilmaschine zumindest die Grenze zwischen der sich an die feldinnere Teilbreite in Richtung des Feldäußeren anschließenden Teilbreite und der sich hieran in Richtung des Feldäußeren anschließenden Teilbreite des Vorgewendes gänzlich überschreitet (d.h. wenn die Grenze zwischen der - vom Feldinneren her betrachtet - zweiten und dritten Teilbreite des Vorgewendes überschritten wird),
      insbesondere wenn
   - eine jeweilige Teilbreite zumindest die Grenze zwischen der - vom Feldinneren her betrachtet - dritten und vierten Teilbreite des Vorgewendes gänzlich überschreitet; und/oder
(b) entlang einer Feldfahrgasse von einem unter einem Winkel von ungleich 0° und ungleich 90° in Bezug auf diese Feldfahrgasse angeordneten Vorgewende fort
   die sukzessive Erhöhung der Drehzahl des jeweiligen Dosierrades der jeweiligen Dosiereinheit unter Berücksichtigung der Latenzzeit, innerhalb welcher das Verteilgut von dem jeweiligen Dosierrad an das jeweilige Verteilorgan überführt wird, frühestens beginnt, wenn
   - eine jeweilige Teilbreite der Verteilmaschine zumindest die Grenze zwischen der sich an die feldinnere Teilbreite anschließenden Teilbreite und der sich hieran in Richtung des Feldäußeren anschließenden Teilbreite des Vorgewendes erreicht (d.h. wenn die Grenze zwischen der - vom Feldinneren her betrachtet - zweiten und dritten Teilbreite des Vorgewendes erreicht wird),
      insbesondere wenn
   - eine jeweilige Teilbreite der Verteilmaschine zumindest die Grenze zwischen der - vom Feldinneren her betrachtet - dritten und vierten Teilbreite des Vorgewendes erreicht.

Das sukzessive Abschalten bzw. Zuschalten eines jeweiligen Dosierrades der jeweiligen Dosiereinheit erstreckt sich in diesem Fall folglich über einen längeren Zeitraum bzw. über einen längeren Abschnitt der Fahrt entlang der jeweiligen Feldfahrgasse über zwei, drei oder auch mehr feldinnere Teilbreiten des Vorgewendes hinweg.

In verfahrenstechnischer Hinsicht kann demnach beispielsweise vorgesehen sein, dass während der Fahrt der pneumatischen Verteilmaschine
(a) entlang einer Feldfahrgasse im Feldinneren auf ein unter einem Winkel von ungleich 0° und ungleich 90° in Bezug auf diese Feldfahrgasse angeordnetes Vorgewende zu
   die sukzessive Verminderung der Drehzahl des jeweiligen Dosierrades der jeweiligen Dosiereinheit unter Berücksichtigung der Latenzzeit, innerhalb welcher das Verteilgut von dem jeweiligen Dosierrad an das jeweilige Verteilorgan überführt wird, spätestens beendet wird, wenn
   - eine jeweilige Teilbreite der Verteilmaschine zumindest die Grenze zwischen der sich an die feldinnere Teilbreite in Richtung des Feldäußeren anschließenden Teilbreite und der sich hieran in Richtung des Feldäußeren anschließenden Teilbreite des Vorgewendes gänzlich überschreitet (d.h. wenn die Grenze zwischen der - vom Feldinneren her betrachtet - zweiten und dritten Teilbreite des Vorgewendes überschritten wird),
      insbesondere wenn
   - eine jeweilige Teilbreite der Verteilmaschine zumindest die Grenze zwischen der - vom Feldinneren her betrachtet - dritten und vierten Teilbreite des Vorgewendes gänzlich überschreitet; und/oder
(b) entlang einer Feldfahrgasse von einem unter einem Winkel von ungleich 0° und ungleich 90° in Bezug auf diese Feldfahrgasse angeordneten Vorgewende fort
   die sukzessive Erhöhung der Drehzahl des jeweiligen Dosierrades der jeweiligen Dosiereinheit unter Berücksichtigung der Latenzzeit, innerhalb welcher das Verteilgut von dem jeweiligen Dosierrad an das jeweilige Verteilorgan überführt wird, frühestens begonnen wird, wenn
   - eine jeweilige Teilbreite der Verteilmaschine zumindest die Grenze zwischen der sich an die feldinnere Teilbreite anschließenden Teilbreite und der sich hieran in Richtung des Feldäußeren anschließenden Teilbreite des Vorgewendes erreicht (d.h. wenn die Grenze zwischen der - vom Feldinneren her betrachtet - zweiten und dritten Teilbreite des Vorgewendes erreicht wird),
      insbesondere wenn
   - eine jeweilige Teilbreite der Verteilmaschine zumindest die Grenze zwischen der - vom Feldinneren her betrachtet - dritten und vierten Teilbreite des Vorgewendes erreicht.

Gemäß einer Ausführungsvariante einer erfindungsgemäßen pneumatischen Verteilmaschine kann vorgesehen sein, dass die Teilbreiten der Verteilmaschine in eine Mehrzahl an in der Steuer- und/oder Regeleinrichtung hinterlegten, virtuellen Teilbreiten unterteilt sind, wobei den virtuellen Teilbreiten sukzessive abgestufte Drehzahlen des jeweiligen Dosierrades der jeweiligen Dosiereinheit zwischen der jeweiligen Soll-Drehzahl und null zugeordnet sind, und wobei die Steuer- und/oder Regeleinrichtung zum sukzessiven Erhöhen bzw. Vermindern der Drehzahl des jeweiligen Dosierrades der jeweiligen Dosiereinheit derart ausgebildet ist, dass die Drehzahl des jeweiligen Dosierrades der jeweiligen Dosiereinheit sukzessive stufenweise erhöht bzw. vermindert wird.

In verfahrenstechnischer Hinsicht kann in diesem Fall demnach vorgesehen sein, dass die Teilbreiten der Verteilmaschine in eine Mehrzahl an virtuellen Teilbreiten unterteilt werden, wobei den virtuellen Teilbreiten sukzessive abgestufte Drehzahlen des jeweiligen Dosierrades der jeweiligen Dosiereinheit zwischen der jeweiligen Soll-Drehzahl und null zugeordnet werden, und wobei die Drehzahl des jeweiligen Dosierrades der jeweiligen Dosiereinheit sukzessive stufenweise erhöht bzw. vermindert wird.

Auf diese Weise ergeben sich innerhalb einer jeweiligen Teilbreite eines Verteilorgans oder einer Gruppe von Verteilorganen der Verteilmaschine wenigstens zwei oder vorzugsweise mehr virtuelle Teilbreiten, wobei jedes Mal, wenn beim Fahren entlang einer Feldfahrgasse eine dieser virtuellen Teilbreiten die demgegenüber "schräge" Grenze zwischen dem Vorgewende und dem Feldinneren bzw. zwischen zumindest zwei oder mehr feldinneren Teilbreiten des Vorgewendes erreicht bzw. verlässt, die Drehzahl des einem jeweiligen Verteilorgan oder einer jeweiligen Gruppe von Verteilorganen einer jeweiligen Teilbreite zugeordneten Dosierrades der jeweiligen Dosiereinheit schrittweise vermindert (sofern die Verteilmaschine auf das Vorgewende zu fährt) bzw. erhöht wird (sofern die Verteilmaschine von dem Vorgewende fort fährt).

Die virtuellen Teilbreiten können hierbei vorzugsweise im Wesentlichen dieselbe Breite besitzen, so dass jede Teilbreite der Verteilmaschine in eine Mehrzahl an gleichen virtuellen Teilbreiten unterteilt ist. Die den virtuellen Teilbreiten zugeordneten, sukzessive abgestuften Drehzahlen des jeweiligen Dosierrades der jeweiligen Dosiereinheit zwischen der jeweiligen Soll-Drehzahl des jeweiligen Dosierrades der jeweiligen Dosiereinheit und null können dabei vorzugsweise im Wesentlichen gleichmäßig abgestuft sein.

Bei dem erfindungsgemäßen Verfahren kann in diesem Fall demnach vorteilhafterweise vorgesehen sein, dass die Teilbreiten der Verteilmaschine in eine Mehrzahl an virtuellen Teilbreiten unterteilt werden, welche im Wesentlichen dieselbe Breite besitzen. Ferner kann es sich als vorteilhaft erweisen, wenn die den virtuellen Teilbreiten zugeordneten, sukzessive abgestuften Drehzahlen des jeweiligen Dosierrades der jeweiligen Dosiereinheit zwischen der jeweiligen Soll-Drehzahl des jeweiligen Dosierrades der jeweiligen Dosiereinheit und null im Wesentlichen gleichmäßig abgestuft werden.

Gemäß einer weiteren Ausführungsvariante einer erfindungsgemäßen pneumatischen Verteilmaschine kann vorgesehen sein, dass die Steuer- und/oder Regeleinrichtung zum im Wesentlichen kontinuierlichen Erhöhen bzw. Vermindern der Drehzahl eines jeweiligen Dosierrades einer jeweiligen Dosiereinheit zwischen der jeweiligen Soll-Drehzahl und null eingerichtet ist, wobei grundsätzlich selbstverständlich auch eine diskontinuierliche bzw. schrittweise Erhöhung bzw. Verminderung der Drehzahl eines jeweiligen Dosierrades einer jeweiligen Dosiereinheit zwischen der jeweiligen Soll-Drehzahl und null denkbar ist.

In verfahrenstechnischer Hinsicht kann in diesem Fall demnach vorzugsweise vorgesehen sein, dass die Drehzahl eines jeweiligen Dosierrades einer jeweiligen Dosiereinheit im Wesentlichen kontinuierlich zwischen der jeweiligen Soll-Drehzahl und null erhöht bzw. vermindert wird.

Auf diese Weise ergibt sich innerhalb einer jeweiligen Teilbreite eines Verteilorgans oder einer Gruppe von Verteilorganen der Verteilmaschine eine im Wesentlichen stufenlose Verminderung bzw. Erhöhung der Drehzahl des einem jeweiligen Verteilorgan oder einer jeweiligen Gruppe von Verteilorganen einer jeweiligen Teilbreite zugeordneten Dosierrades der jeweiligen Dosiereinheit zwischen der jeweiligen Soll-Drehzahl und null, wobei die Drehzahl des einem jeweiligen Verteilorgan oder einer jeweiligen Gruppe von Verteilorganen einer jeweiligen Teilbreite zugeordneten Dosierrades der jeweiligen Dosiereinheit im Wesentlichen kontinuierlich vermindert (sofern die Verteilmaschine auf das Vorgewende zu fährt) bzw. erhöht wird (sofern die Verteilmaschine von dem Vorgewende fort fährt), so lange eine jeweilige Teilbreite die Grenze zwischen dem Vorgewende und dem Feldinneren bzw. zumindest einer oder mehrerer der feldinneren Teilbreiten des Vorgewendes schneidet. Die Erhöhung bzw. Verminderung der Drehzahl des Dosierrades der jeweiligen Dosiereinheit kann dabei zweckmäßigerweise einerseits in Abhängigkeit der Fahrgeschwindigkeit, andererseits in Abhängigkeit der Breite einer jeweiligen Teilbreite sowie des Winkels zwischen der Feldfahrgasse, entlang derer sich die Verteilmaschine bewegt, und der Grenze zwischen dem Vorgewende und dem Feldinneren eingestellt werden.

Darüber hinaus kann es sich als vorteilhaft erweisen, wenn während des Anlegens des Vorgewendes, anlässlich dessen die pneumatische Verteilmaschine üblicherweise auf einer Vorgewendefahrgasse um den Umfang des Feldes herum bewegt wird, zumindest das Dosierrad der Dosiereinheit, welches der dem Feldinneren zugewandten Verteilorgan oder der dem Feldinneren zugewandten Gruppe von Verteilorganen (also der feldinneren Teilbreite des Vorgewendes) zugeordnet ist, auf eine gegenüber der Soll-Drehzahl verminderte Drehzahl gesteuert und/oder geregelt wird, um zumindest auf die dem Feldinneren zugewandte Teilbreite des Vorgewendes eine gegenüber der Soll-Verteilmenge pro Flächeneinheit verminderte Verteilgutmenge aufzubringen. Auf diese Weise kann in Verbindung mit der erfindungsgemäßen sukzessiven - stufenweisen oder im Wesentlichen kontinuierlichen - Verminderung bzw. Erhöhung der Drehzahl des jeweiligen Dosierrades einer jeweiligen Dosiereinheit, welche dem Verteilorgan oder der Gruppe von Verteilorganen einer jeweiligen Teilbreite der Verteilmaschine zugeordnet ist, zwischen der Soll-Drehzahl und null während der Fahrt der pneumatischen Verteilmaschine entlang einer Feldfahrgasse auf ein demgegenüber "schräges" Vorgewende zu bzw. von diesem fort eine noch gleichmä-βigere Verteilung erreicht werden, indem Überlappungen der einerseits beim Anlegen des Vorgewendes, andererseits beim Fahrgassenfahren im Feldinneren ausgebrachten Streufächer zumindest innerhalb der dem Feldinneren zugewandten Teilbreite des Vorgewendes durch die dort während des Anlegens des Vorgewendes verringerte Verteilgutmenge kompensiert werden. So kann beispielhaft während des Anlegens des Vorgewendes auf die feldinnere Teilbreite des Vorgewendes z.B. nur etwa die Hälfte der Soll-Verteilmenge pro Flächeneinheit aufgebracht werden, was beim Fahrgassenfahren auf das Vorgewende zu bzw. von diesem fort dadurch kompensiert wird, dass die Drehzahl der jeweiligen Dosierräder der Dosiereinheiten sukzessive vermindert bzw. erhöht wird, während eine jeweilige Teilbreite des diesen zugeordneten jeweiligen Verteilorgans der Verteilmaschine die feldinnere Teilbreite des Vorgewendes überfährt.

In diesem Zusammenhang kann es sich auch als vorteilhaft erweisen, wenn während des Anlegens des Vorgewendes
- zumindest die beiden Dosierräder der Dosiereinheit, welche den beiden dem Feldinneren zugewandten Verteilorganen oder den beiden dem Feldinneren zugewandten Gruppen von Verteilorganen zugeordnet sind, auf je eine gegenüber der Soll-Drehzahl verminderte Drehzahl gesteuert und/oder geregelt werden,
   wobei insbesondere
- zumindest die drei Dosierräder der Dosiereinheit, welche den drei dem Feldinneren zugewandten Verteilorganen oder den drei dem Feldinneren zugewandten Gruppen von Verteilorganen zugeordnet sind, auf je eine gegenüber der Soll-Drehzahl verminderte Drehzahl gesteuert und/oder geregelt werden,
um zumindest auf den beiden dem Feldinneren zugewandten Teilbreiten des Vorgewendes, insbesondere zumindest auf den drei dem Feldinneren zugewandten Teilbreiten des Vorgewendes, eine gegenüber der Soll-Verteilmenge pro Flächeneinheit verminderte, vom Feldäußeren in Richtung des Feldinneren abnehmende Verteilgutmenge aufzubringen.

So kann im erstgenannten Fall beispielsweise vorgesehen sein, dass auf der dem Feldinneren zugewandten Teilbreite des Vorgewendes etwa 33,3% der Soll-Verteilmenge pro Flächeneinheit und auf die sich hieran in Richtung des Feldrandes anschließende Teilbreite des Vorgewendes etwa 66,7% der Soll-Verteilmenge pro Flächeneinheit aufgebracht werden, wobei auf die sich hieran wiederum in Richtung des Feldäußeren anschließenden Teilbreiten des Vorgewendes im Wesentlichen 100% der Soll-Verteilmenge pro Flächeneinheit aufgebracht werden. Beim Fahrgassenfahren auf das Vorgewende zu bzw. von diesem fort wird dies dann dadurch kompensiert, dass die Drehzahl der jeweiligen Dosierräder der Dosiereinheiten sukzessive vermindert bzw. erhöht wird, während eine jeweilige Teilbreite des diesen zugeordneten jeweiligen Verteilorgans der Verteilmaschine die beiden feldinneren Teilbreiten des Vorgewendes überfährt. Das sukzessive Vermindern bzw. Erhöhen der Drehzahl eines jeweiligen Dosierrades der Dosiereinheiten zwischen der Soll-Drehzahl und null bzw. zwischen null und der Soll-Drehzahl vollzieht sich folglich über die Situation hinweg, während das einer jeweiligen Teilbreite der Verteilmaschine zugeordnete Verteilorgan der entlang einer Feldfahrgasse auf das Vorgewende zu bzw. von diesem fort bewegten Verteilmaschine die beiden feldinneren Teilbreiten des Vorgewendes überfährt.

Im letztgenannten Fall kann beispielsweise vorgesehen sein, dass auf der dem Feldinneren zugewandten Teilbreite des Vorgewendes etwa 25% der Soll-Verteilmenge pro Flächeneinheit, auf die sich hieran in Richtung des Feldrandes anschließende Teilbreite des Vorgewendes etwa 50% der Soll-Verteilmenge pro Flächeneinheit und auf die sich wiederum hieran in Richtung des Feldrandes anschließende Teilbreite des Vorgewendes etwa 75% der Soll-Verteilmenge pro Flächeneinheit aufgebracht werden, wobei auf die sich hieran wiederum in Richtung des Feldäußeren anschließenden Teilbreiten des Vorgewendes im Wesentlichen 100% der Soll-Verteilmenge pro Flächeneinheit aufgebracht werden. Beim Fahrgassenfahren auf das Vorgewende zu bzw. von diesem fort wird dies dann dadurch kompensiert, dass die Drehzahl der jeweiligen Dosierräder der Dosiereinheiten sukzessive vermindert bzw. erhöht wird, während eine jeweilige Teilbreite des diesen zugeordneten jeweiligen Verteilorgans die drei feldinneren Teilbreiten des Vorgewendes überfährt. Das sukzessive Vermindern bzw. Erhöhen der Drehzahl eines jeweiligen Dosierrades der Dosiereinheiten zwischen der Soll-Drehzahl und null bzw. zwischen null und der Soll-Drehzahl vollzieht sich folglich über die Situation hinweg, während das einer jeweiligen Teilbreite der Verteilmaschine zugeordnete Verteilorgan der entlang einer Feldfahrgasse auf das Vorgewende zu bzw. von diesem fort bewegten Verteilmaschine die drei feldinneren Teilbreiten des Vorgewendes überfährt.

Entsprechend ist es selbstverständlich denkbar, wenn während des Anlegens des Vorgewendes vier oder mehr feldinnere Teilbreiten des Vorgewendes mit von außen (d.h. vom Feldrand) nach innen (d.h. zur Grenze des Vorgewendes und dem Feldinneren) sukzessive abgestuft verminderten Verteilmengen pro Flächeneinheit versorgt werden, was beim Fahrgassenfahren dann wiederum dadurch kompensiert wird, dass die Drehzahl der jeweiligen Dosierräder der Dosiereinheiten sukzessive vermindert bzw. erhöht wird, während eine jeweilige Teilbreite des diesen zugeordneten jeweiligen Verteilorgans der Verteilmaschine die mit geringeren Verteilmengen pro Flächeneinheit versorgten feldinneren Teilbreiten des Vorgewendes überfährt. Das sukzessive Vermindern bzw. Erhöhen der Drehzahl eines jeweiligen Dosierrades der Dosiereinheiten zwischen der Soll-Drehzahl und null bzw. zwischen null und der Soll-Drehzahl vollzieht sich folglich über die Situation hinweg, während das einer jeweiligen Teilbreite zugeordnete Verteilorgan der entlang einer Feldfahrgasse auf das Vorgewende zu bzw. von diesem fort bewegten Verteilmaschine die vier oder mehr feldinneren Teilbreiten des Vorgewendes überfährt.

Wie als solches aus der eingangs zitierten DE 10 2004 030 240 A1 bekannt, kann gemäß einer vorteilhaften Weiterbildung der pneumatischen Verteilmaschine vorgesehen sein, dass die Steuer- und/oder Regeleinrichtung ferner bei einer Kurvenfahrt der Verteilmaschine
- zum sukzessiven Erhöhen der Drehzahl zumindest eines Dosierrades einer jeweiligen Dosiereinheit, welche zumindest einem kurvenäußeren Verteilorgan oder einer kurvenäußeren Gruppe von Verteilorganen zugeordnet ist, und/oder
- zum sukzessiven Vermindern der Drehzahl zumindest eines eines Dosierrades einer jeweiligen Dosiereinheit, welche zumindest einem kurveninneren Verteilorgan oder einer kurveninneren Gruppe von Verteilorganen zugeordnet ist, in Abhängigkeit des Kurvenradius eingerichtet ist.

In Bezug auf das erfindungsgemäße Verfahren kann demnach vorgesehen sein, dass ferner bei einer Kurvenfahrt der Verteilmaschine
- die Drehzahl zumindest eines Dosierrades einer jeweiligen Dosiereinheit, welche zumindest einem kurvenäußeren Verteilorgan oder einer kurvenäußeren Gruppe von Verteilorganen zugeordnet ist, in Abhängigkeit des Kurvenradius sukzessive erhöht wird, und/oder
- die Drehzahl zumindest eines Dosierrades einer jeweiligen Dosiereinheit, welche zumindest einem kurveninneren Verteilorgan oder einer kurveninneren Gruppe von Verteilorganen zugeordnet ist, in Abhängigkeit des Kurvenradius sukzessive vermindert wird.
Dies geschieht zweckmäßigerweise wiederum unter Berücksichtigung der Latenzzeit, innerhalb welcher das Verteilgut von dem jeweiligen Dosierrad der Dosiereinheiten an das jeweilige Verteilorgan überführt wird. Auf diese Weise wird im kurveninneren Bereich weniger Verteilgut ausgebracht als im kurvenäußeren Bereich, so dass sich bei entsprechender Steuerung und/oder Regelung der Drehzahl der Dosierräder der Dosiereinheiten, welche den Verteilorganen oder den Gruppen von Verteilorganen einer jeweiligen Teilbreite zugeordnet sind, eine gleichmäßige Verteilung des Verteilgutes über die gesamte Arbeitsbreite auch im Bereich einer Kurvenfahrt ergibt, wie beispielsweise dann, wenn die Feldfahrgasse(n) nicht durchgehend geradlinig angelegt ist bzw. sind.

Wie als solches aus dem Stand der Technik gleichfalls bekannt, kann die erfindungsgemäße pneumatische Verteilmaschine in vorteilhafter Ausgestaltung mit einer Positionserfassungseinrichtung, wie in Form eines GPS-Empfängers, ausgestattet sein, welche mit der Steuer- und/oder Regeleinrichtung in Verbindung steht. Die Steuer- und/oder Regeleinrichtung kann ferner insbesondere zum Abspeichern und/oder Auslesen einer Applikationskarte eingerichtet sein, um die Drehzahl der Dosierräder der Dosiereinheiten in Abhängigkeit der erfassten Position der Verteilmaschine entsprechend der in der Applikationskarte hinterlegten Soll-Verteilmenge pro Flächeneinheit auf die jeweilige Soll-Drehzahl zu steuern und/oder zu regeln.

In verfahrenstechnischer Hinsicht kann in diesem Fall vorgesehen sein, dass die Position der Verteilmaschine mittels einer Positionserfassungseinrichtung, wie in Form eines GPS-Empfängers, ermittelt und die Drehzahl der Dosierräder der Dosiereinheiten in Abhängigkeit der erfassten Position der Verteilmaschine, insbesondere entsprechend der in einer Applikationskarte hinterlegten Soll-Verteilmenge pro Flächeneinheit, auf die jeweilige Soll-Drehzahl gesteuert und/oder geregelt wird.

Ein solches Positionserfassungssystem vermag in diesem Fall insbesondere zur Ermittlung der jeweiligen Ist-Position der auf einer Feldfahrgasse in Richtung eines demgegenüber "schrägen" Vorgewendes bzw. von diesem fort fahrenden pneumatischen Verteilmaschine zu dienen, um an den jeweiligen Relativpositionen der Verteilmaschine in Bezug auf die Grenze zwischen dem Vorgewende und dem Feldinneren bzw. an den Grenzen der Teilbreiten des Vorgewendes Verminderungen bzw. Erhöhungen der Drehzahl der Dosierräder der Dosiereinheiten, welche den Verteilorganen oder den Gruppen von Verteilorganen der jeweiligen Teilbreiten zugeordnet sind, durchzuführen.

Weitere Merkmale und Vorteile der Erfindung ergeben sich aus der nachfolgenden Beschreibung eines Ausführungsbeispiels unter Bezugnahme auf die Zeichnungen. Dabei zeigen:

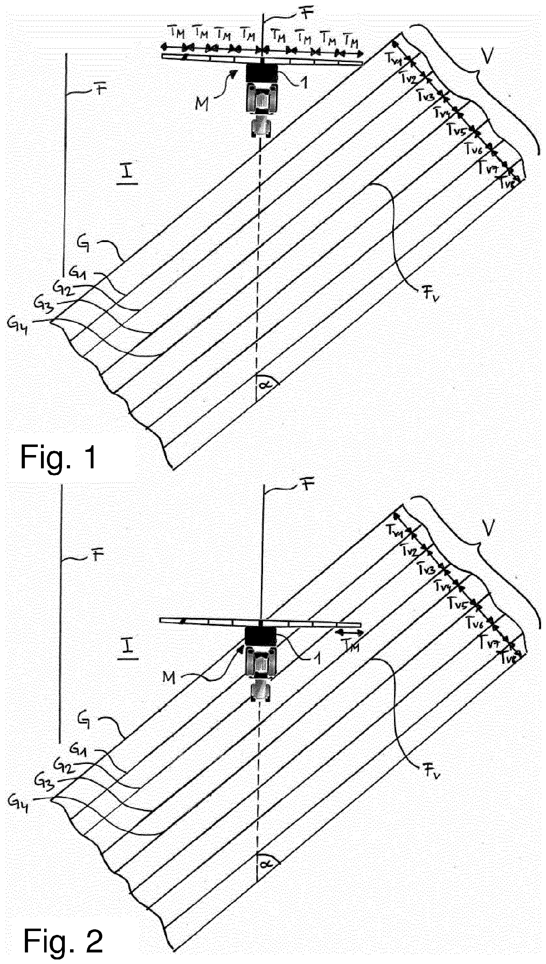

- Fig. 1: eine schematische Ansicht einer pneumatischen Verteilmaschine von oben betrachtet in einer Situation, in welcher die Verteilmaschine entlang einer Feldfahrgasse im Feldinneren auf ein unter einem Winkel von ungleich 0° und ungleich 90° in Bezug auf diese Feldfahrgasse angeordnetes Vorgewende zu fährt, wobei die äußere, dem Vorgewende zugewandte Teilbreite der Verteilmaschine gerade die Grenze des Vorgewendes zum Feldinneren hin erreicht hat;
- Fig. 2: eine im Wesentlichen der Fig. 1 entsprechende Ansicht der pneumatischen Verteilmaschine in einer Situation, in welcher sie entlang der Feldfahrgasse etwas weiter auf das Vorgewende zu gefahren ist, wobei die äußere, dem Vorgewende zugewandte Teilbreite der Verteilmaschine gerade die Grenze zwischen der sich an die feldinnere Teilbreite in Richtung des Feldäußeren anschließenden Teilbreite und der sich hieran in Richtung des Feldäußeren anschließenden Teilbreite, also die Grenze zwischen der - vom Feldinneren her betrachtetzweiten und dritten Teilbreite, des Vorgewendes überschritten hat;

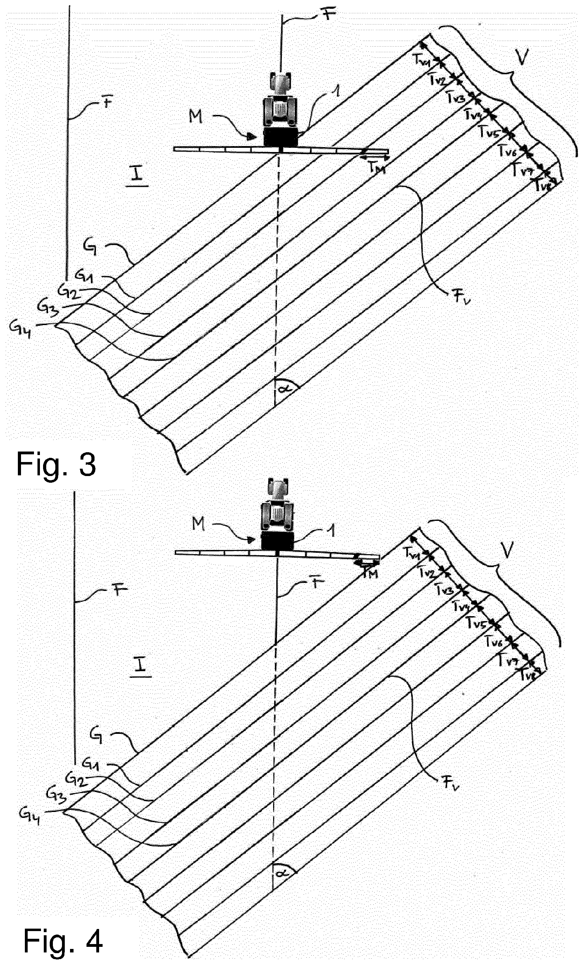

- Fig. 3: eine im Wesentlichen den Fig. 1 und 2 entsprechende schematische Ansicht der pneumatischen Verteilmaschine in einer Situation, in welcher die Verteilmaschine im Vorgewende gewendet hat und nunmehr entlang einer weiteren, unter einem Winkel von ungleich 0° und ungleich 90° in Bezug auf das Vorgewende angeordneten Feldfahrgasse von dem Vorgewende fort in Richtung des Feldinneren fährt, wobei die äußere, dem Feldinneren zugewandte Teilbreite der Verteilmaschine gerade die Grenze zwischen der sich an die feldinnere Teilbreite in Richtung des Feldäußeren anschließenden Teilbreite und der sich hieran in Richtung des Feldäußeren anschließenden Teilbreite, also die Grenze zwischen der - vom Feldinneren her betrachtet - zweiten und dritten Teilbreite, des Vorgewendes erreicht hat; und
- Fig. 4: eine im Wesentlichen den Fig. 1 bis 3 entsprechende Ansicht der pneumatischen Verteilmaschine in einer Situation, in welcher die Verteilmaschine gegenüber der Fig. 3 entlang der Feldfahrgasse etwas weiter aus dem Vorgewende fort gefahren ist, wobei die äußere, dem Feldinneren zugewandte Teilbreite der Verteilmaschine gerade die Grenze zwischen dem Vorgewende und dem Feldinneren überschritten hat.

In den Fig. 1 bis 4 ist jeweils eine Draufsicht auf eine pneumatische Verteilmaschine M schematisch wiedergegeben, welche sich von einer der im Feldinneren I üblicherweise etwa parallel zueinander angelegten Feldfahrgassen F vom Feldinneren I auf ein Vorgewende V zu (Fig. 1 und 2) bzw. von dem Vorgewende V fort in Richtung des Feldinneren I bewegt (Fig. 3 und 4). Das Vorgewende V ist unter einem Winkel α von ungleich 0° und ungleich 90° - im vorliegenden Fall z.B. von etwa 45° - in Bezug auf die Feldfahrgassen F angeordnet.

Die pneumatische Verteilmaschine M dient im vorliegenden Fall zum Ausbringen von pulver- bzw. partikelförmigem Verteilgut und kann beispielweise in Form eines pneumatischen Düngerstreuers ausgestaltet sein. Sie kann ferner als Selbstfahrer (nicht gezeigt) oder in Form eines von dem Dreipunkt-Kraftheber eines Traktors aufgenommenen Anbaugerätes ausgestaltet sein und umfasst einen Behälter zur Bevorratung des Verteilgutes sowie eine Mehrzahl an dem Behälter 1 nachgeordneten, nicht zeichnerisch wiedergegebenen Dosiereinheiten mit je einem unabhängig voneinander steuer- und/oder regelbar drehangetriebenen Dosierrad zur Dosierung des Verteilgutes. Einem jeweiligen Dosierrad der Dosiereinheiten ist jeweils eine zeichnerisch gleichfalls nicht dargestellte Übergabekammer nachgeordnet, welche einerseits mit wenigstens einem Gebläse (ebenfalls nicht gezeigt) in Verbindung steht, andererseits in je eine Förderleitung (ebenfalls nicht gezeigt) mündet, um das von einem jeweiligen Dosierrad der Dosiereinheiten dosierte Verteilgut pneumatisch an je ein Verteilorgan (gleichfalls nicht zeichnerisch dargestellt) oder an je eine Gruppe von Verteilorganen zu überführen. Die Verteilorgane, welche z.B. in Form von Prallkörpern ausgestaltet sein können, sind an sich beidseits zur Längsachse der Verteilmaschine M erstreckenden Auslegern mit unterschiedlichem seitlichem Abstand von der Längsachse der Verteilmaschine M angeordnet, wobei die jeweiligen Verteilorgane oder die jeweiligen Gruppen von Verteilorganen durch Rotieren bzw. Stillsetzen eines jeweiligen Dosierrades einer jeweiligen Dosiereinheit zu- bzw. abschaltbar sind, um für eine Teilbreitenschaltung mit einer Mehrzahl an - im vorliegenden Fall z.B. 8 - Teilbreiten T_{M} der Verteilmaschine M zu sorgen. Zur Steuerung und/oder Regelung der Drehzahl der Dosierräder der Dosiereinheiten in Abhängigkeit wenigstens eines Parameters aus der Gruppe Fahrgeschwindigkeit der Verteilmaschine M, Soll-Verteilmenge pro Flächeneinheit und Arbeitsbreite (die maximale Arbeitsbreite entspricht der Summe der Teilbreiten T_{M} der Verteilmaschine M) auf eine der gewünschten Soll-Verteilmenge pro Flächeneinheit entsprechende Soll-Drehzahl dient eine nicht zeichnerisch wiedergegebene Steuer- und/oder Regeleinrichtung.

In den Fig. 1 bis 4 ist ferner eine zum Anlegen des Vorgewendes V dienende Vorgewendefahrgasse F_{V} erkennbar. In dem Vorgewende V sind einerseits die einzelnen Teilbreiten T_{V1} bis T_{V8} angedeutet, die beim Anlegen des Vorgewendes V durch die einzelnen Teilbreiten T_{M} der Verteilmaschine M erzeugt worden sind, andererseits die Grenzen G₁, G₂, G₃ etc. zwischen diesen Teilbreiten T_{V1} bis T_{V8} des Vorgewendes.

Nachstehend ist nun eine Ausführungsform eines erfindungsgemäßen Verfahrens unter Bezugnahme auf die Fig. 1 bis 4 näher erläutert, wobei exemplarisch lediglich jeweils auf die äußere, dem Vorgewende V zugewandte Teilbreite T_{M} der Verteilmaschine M Bezug genommen wird. Es sei darauf hingewiesen, dass mit den übrigen Teilbreiten T_{M} der Verteilmaschine M in entsprechender Weise verfahren wird, weshalb dies keiner zusätzlichen Erörterung bedarf.

In der Fig. 1 ist eine Situation dargestellt, in welcher die Verteilmaschine M entlang einer der Feldfahrgassen F im Feldinneren I auf das demgegenüber unter dem Winkel α "schräg" angeordnete Vorgewende V zu fährt, wobei die äußere, dem Vorgewende V zugewandte Teilbreite T_{M} der Verteilmaschine M gerade die Grenze G des Vorgewendes V zum Feldinneren I hin erreicht hat. In dieser Situation (oder beispielsweise auch etwas später, z.B. wenn der Mittelpunkt der dem Vorgewende zugewandten, äußeren Teilbreite T_{M} der Verteilmaschine M gerade die Grenze G des Vorgewendes V zum Feldinneren I hin erreicht hat; nicht gezeigt) beginnt die die Steuer- und/oder Regeleinrichtung der Verteilmaschine M, die Drehzahl desjenigen Dosierrades der jeweiligen Dosiereinheit, welche das Verteilorgan oder die Gruppe von Verteilorganen dieser äußeren, dem Vorgewende V zugewandten Teilbreite T_{M} der Verteilmaschine M mit Verteilgut versorgt, beginnend von der Soll-Drehzahl im Feldinneren I sukzessive, vorzugsweise etwa kontinuierlich, zu vermindern.

Bei der in der Fig. 2 wiedergegebenen Situation ist die Verteilmaschine M gegenüber der Situation gemäß Fig. 1 entlang der Feldfahrgasse F etwas weiter auf das Vorgewende V zu gefahren, wobei die äußere, dem Vorgewende V zugewandte Teilbreite T_{M} der Verteilmaschine M gerade die Grenze G₂ zwischen der sich an die feldinnere Teilbreite T_{V1} in Richtung des Feldäußeren anschließenden Teilbreite T_{V2} und der sich hieran in Richtung des Feldäußeren anschließenden Teilbreite T_{V3}, also die Grenze G₂ zwischen der - vom Feldinneren I her betrachtet - zweiten T_{V2} und dritten Teilbreite T_{V3}, des Vorgewendes V überschritten hat. In dieser Situation (oder beispielsweise auch etwas früher, z.B. wenn der Mittelpunkt der dem Vorgewende V zugewandten, äußeren Teilbreite T_{M} der Verteilmaschine M gerade die Grenze G₂ zwischen der zweiten T_{V2} und dritten Teilbreite T_{V3} des Vorgewendes V überschritten hat) hat die Steuer- und/oder Regeleinrichtung der Verteilmaschine M die Drehzahl desjenigen Dosierrades der jeweiligen Dosiereinheit, welche das Verteilorgan oder die Gruppe von Verteilorganen dieser äu-βeren, dem Vorgewende V zugewandten Teilbreite T_{M} der Verteilmaschine M mit Verteilgut versorgt, sukzessive auf null vermindert, so dass das Verteilorgan oder die Gruppe von Verteilorganen dieser Teilbreite T_{M} nicht mehr mit Verteilgut versorgt wird.

In der Fig. 3 ist eine Situation gezeigt, in welcher die Verteilmaschine M im Vorgewende V gewendet hat und nunmehr entlang einer weiteren, unter einem Winkel von ungleich 0° und ungleich 90° - hier wiederum z.B. von etwa 45° - in Bezug auf Vorgewende V angeordneten Feldfahrgasse F von dem Vorgewende V fort in Richtung des Feldinneren I fährt, wobei die äußere, dem Feldinneren I zugewandte Teilbreite T_{M} der Verteilmaschine M gerade die Grenze G₂ zwischen der sich an die feldinnere Teilbreite T_{V1} in Richtung des Feldäußeren anschließenden Teilbreite T_{V2} und der sich hieran in Richtung des Feldäußeren anschließenden Teilbreite T_{V3}, also die Grenze G₂ zwischen der - vom Feldinneren I her betrachtet - zweiten Teilbreite T_{V2} und dritten Teilbreite T_{V2}, des Vorgewendes V erreicht hat. In dieser Situation (oder beispielsweise auch etwas später, z.B. wenn der Mittelpunkt der dem Vorgewende V zugewandten, äußeren Teilbreite T_{M} der Verteilmaschine M gerade die Grenze G₂ des zwischen der - vom Feldinneren I her betrachtet - zweiten T_{V2} und dritten Teilbreite T_{V2} des Vorgewendes V erreicht hat) beginnt die Steuer- und/oder Regeleinrichtung der Verteilmaschine M, die Drehzahl desjenigen Dosierrades der jeweiligen Dosiereinheit, welche das Verteilorgan oder die Gruppe von Verteilorganen dieser äußeren, dem Vorgewende V zugewandten Teilbreite T_{M} der Verteilmaschine M mit Verteilgut versorgt, beginnend von null im Vorgewende V sukzessive, vorzugsweise etwa kontinuierlich, auf die Soll-Drehzahl im Feldinneren I zu erhöhen.

Bei der in der Fig. 4 wiedergegebenen Situation ist die Verteilmaschine M gegenüber der Situation gemäß Fig. 3 entlang der Feldfahrgasse F etwas weiter von dem Vorgewende V fort in Richtung des Feldinneren I gefahren, wobei die äu-βere, dem Vorgewende V zugewandte Teilbreite T_{M} der Verteilmaschine M gerade die Grenze G zwischen dem Vorgewende V und dem Feldinneren I überschritten hat. In dieser Situation (oder beispielsweise auch etwas früher, z.B. wenn der Mittelpunkt der dem Vorgewende V zugewandten, äußeren Teilbreite T_{M} der Verteilmaschine M gerade die Grenze G zwischen dem Vorgewende V und dem Feldinneren I überschritten hat) hat die Steuer- und/oder Regeleinrichtung der Verteilmaschine M die Drehzahl desjenigen Dosierrades der jeweiligen Dosiereinheit, welche das Verteilorgan oder die Gruppe von Verteilorganen dieser äußeren, dem Vorgewende V zugewandten Teilbreite T_{M} der Verteilmaschine M mit Verteilgut versorgt, sukzessive auf die Soll-Drehzahl erhöht, so dass das Verteilorgan oder die Gruppe von Verteilorganen dieser Teilbreite T_{M} nun wieder mit der gewünschten Soll-Verteilmenge pro Flächeneinheit an Verteilgut versorgt wird.

Bei dem vorstehend beschriebenen Verfahren, bei welchem sich der Abschalt- und der Einschaltvorgang der den Verteilorganen einer jeweiligen Teilbreite T_{M} der Verteilmaschine M zugeordneten Dosierräder über einen Zeitraum erstreckt, in welchem eine jeweilige Teilbreite T_{M} der Verteilmaschine die beiden dem Feldinneren I zugewandten Teilbreiten T_{V1}, T_{V2} des Vorgewendes V überfährt, erweist es sich zwecks eines sehr homogenen Übergangs zwischen dem Feldinneren I und dem Vorgewende V ohne nennenswerte lokale Unter- bzw. Überversorgungen als zweckmäßig, wenn während des Anlegens des Vorgewendes V die beiden Dosierräder der Dosiereinheit, welche den beiden dem Feldinneren I zugewandten Verteilorganen oder den beiden dem Feldinneren I zugewandten Gruppen von Verteilorganen zugeordnet sind, auf je eine gegenüber der Soll-Drehzahl verminderte Drehzahl gesteuert und/oder geregelt werden, um auf den beiden dem Feldinneren I zugewandten Teilbreiten T_{V1}, T_{V2} des Vorgewendes V eine gegenüber der Soll-Verteilmenge pro Flächeneinheit verminderte, vom Feldäußeren in Richtung des Feldinneren I abnehmende Verteilgutmenge aufzubringen. Hierbei kann beispielsweise vorgesehen sein, dass auf der dem Feldinneren I zugewandten Teilbreite T_{V1} des Vorgewendes V etwa 33,3% der Soll-Verteilmenge pro Flächeneinheit und auf die sich hieran in Richtung des Feldrandes anschließende Teilbreite T_{V2} des Vorgewendes V etwa 66,7% der Soll-Verteilmenge pro Flächeneinheit aufgebracht werden.

Schließlich sei der guten Ordnung halber darauf hingewiesen, dass es selbstverständlich in entsprechender Weise von Vorteil sein kann, wenn
- der Abschalt- und der Einschaltvorgang der den Verteilorganen einer jeweiligen Teilbreite T_{M} der Verteilmaschine M zugeordneten Dosierräder über einen Zeitraum eingestellt wird, in welchem eine jeweilige Teilbreite T_{M} der Verteilmaschine nur die innere, dem Feldinneren I zugewandte Teilbreite T_{V1} des Vorgewendes V überfährt (beim Anlegen des Vorgewendes V kann in diesem Fall vorzugsweise z.B. nur etwa 50% der Soll-Verteilmenge pro Flächeneinheit auf die innere Teilbreite T_{V1} des Vorgewendes aufgebracht werden); oder
- der Abschalt- und der Einschaltvorgang der den Verteilorganen einer jeweiligen Teilbreite T_{M} der Verteilmaschine M zugeordneten Dosierräder über einen Zeitraum eingestellt wird, in welchem eine jeweilige Teilbreite T_{M} der Verteilmaschine drei oder mehr der inneren, dem Feldinneren I zugewandten Teilbreiten T_{V1}, T_{V2}, T_{V3}, etc. des Vorgewendes V überfährt (beim Anlegen des Vorgewendes V können in diesem Fall vorzugsweise z.B. die jeweiligen Teilbreiten T_{V1}, T_{V2}, T_{V3}, etc. des Vorgewendes V mit, insbesondere gleichmäßig, vom Feldäußeren in Richtung des Feldinneren I abnehmenden Verteilgutmengen versorgt werden, wobei im Falle von 3 während des Ab-/Einschaltens überfahrenen Teilbreiten z.B. vorgesehen sein kann, dass auf der dem Feldinneren I zugewandten Teilbreite T_{V1} des Vorgewendes etwa 25% der Soll-Verteilmenge pro Flächeneinheit, auf die sich hieran in Richtung des Feldrandes anschließende Teilbreite T_{V2} des Vorgewendes V etwa 50% der Soll-Verteilmenge pro Flächeneinheit und auf die sich hieran wiederum in Richtung des Feldrandes anschließende Teilbreite T_{V3} des Vorgewendes V etwa 75% der Soll-Verteilmenge pro Flächeneinheit aufgebracht werden.

## Patentansprüche

1. Pneumatische Verteilmaschine (M) zum Ausbringen von Verteilgut umfassend:
- wenigstens einen Behälter (1) zur Bevorratung des Verteilgutes,
- eine Mehrzahl an dem Behälter (1) nachgeordneten Dosiereinheiten mit je wenigstens einem unabhängig voneinander steuer- und/oder regelbar drehangetriebenen Dosierrad zur Dosierung des Verteilgutes,
- eine Mehrzahl an einem jeweiligen Dosierrad der Dosiereinheiten nachgeordneten Übergabekammern, welche einerseits mit wenigstens einem Gebläse in Verbindung stehen und welche andererseits in je wenigstens eine Förderleitung münden, um das von einem jeweiligen Dosierrad der Dosiereinheiten dosierte Verteilgut pneumatisch an je ein Verteilorgan oder an je eine Gruppe von Verteilorganen zu überführen, welche mit unterschiedlichem seitlichem Abstand von der Längsachse der Verteilmaschine angeordnet sind, und
- eine Steuer- und/oder Regeleinrichtung zur Steuerung und/oder Regelung der Drehzahl der Dosierräder der Dosiereinheiten in Abhängigkeit wenigstens eines Parameters aus der Gruppe Fahrgeschwindigkeit der Verteilmaschine, Soll-Verteilmenge pro Flächeneinheit und Arbeitsbreite auf eine der gewünschten Soll-Verteilmenge pro Flächeneinheit entsprechende Soll-Drehzahl,
wobei die jeweiligen Verteilorgane oder die jeweiligen Gruppen von Verteilorganen durch Rotieren bzw. Stillsetzen des jeweiligen Dosierrades einer jeweiligen Dosiereinheit zu- bzw. abschaltbar sind, um für eine Teilbreitenschaltung mit einer Mehrzahl an Teilbreiten (T_{M}) der Verteilmaschine (M) zu sorgen, **dadurch gekennzeichnet, dass** während der Fahrt der pneumatischen Verteilmaschine (M)
(a) entlang einer Feldfahrgasse (F) im Feldinneren (I) auf ein unter einem Winkel (α) von ungleich 0° und ungleich 90° in Bezug auf diese Feldfahrgasse (F) angeordnetes Vorgewende (V) zu
die Steuer- und/oder Regeleinrichtung zum sukzessiven Vermindern der Drehzahl eines jeweiligen Dosierrades einer jeweiligen Dosiereinheit, welche dem Verteilorgan oder der Gruppe von Verteilorganen einer jeweiligen Teilbreite (T_{M}) der Verteilmaschine (M) zugeordnet ist, zwischen der Soll-Drehzahl und null eingerichtet ist, wobei die sukzessive Verminderung der Drehzahl des jeweiligen Dosierrades der jeweiligen Dosiereinheit unter Berücksichtigung der Latenzzeit, innerhalb welcher das Verteilgut von dem jeweiligen Dosierrad an das jeweilige Verteilorgan überführt wird, frühestens beginnt, wenn eine jeweilige Teilbreite (T_{M}) der Verteilmaschine (M) die Grenze (G) des Vorgewendes (V) zum Feldinneren (I) hin erreicht, und spätestens endet, wenn eine jeweilige Teilbreite (T_{M}) der Verteilmaschine (M) zumindest die Grenze (G₁) zwischen der feldinneren Teilbreite (T_{V1}) und der sich hieran in Richtung des Feldäußeren anschließenden Teilbreite (T_{V2}) des Vorgewendes (V) gänzlich überschreitet; und/oder
(b) entlang einer Feldfahrgasse (F) von einem unter einem Winkel (α) von ungleich 0° und ungleich 90° in Bezug auf diese Feldfahrgasse (F) angeordneten Vorgewende (V) fort
die Steuer- und/oder Regeleinrichtung zum sukzessiven Erhöhen der Drehzahl eines jeweiligen Dosierrades einer jeweiligen Dosiereinheit, welche dem Verteilorgan oder der Gruppe von Verteilorganen einer jeweiligen Teilbreite (T_{M}) der Verteilmaschine (M) zugeordnet ist, zwischen null und der Soll-Drehzahl eingerichtet ist, wobei die sukzessive Erhöhung der Drehzahl des jeweiligen Dosierrades der jeweiligen Dosiereinheit unter Berücksichtigung der Latenzzeit, innerhalb welcher das Verteilgut von dem jeweiligen Dosierrad an das jeweilige Verteilorgan überführt wird, frühestens beginnt, wenn eine jeweilige Teilbreite (T_{M}) der Verteilmaschine (M) zumindest die Grenze (G₁) zwischen der feldinneren Teilbreite (T_{V1}) und der sich hieran in Richtung des Feldäußeren anschließenden Teilbreite (T_{V2}) des Vorgewendes (V) erreicht, und spätestens endet, wenn eine jeweilige Teilbreite (T_{M}) der Verteilmaschine (M) die Grenze (G) des Vorgewendes (V) zum Feldinneren (I) gänzlich überschreitet.

2. Verteilmaschine nach Anspruch 1, **dadurch gekennzeichnet, dass** während der Fahrt der pneumatischen Verteilmaschine (M)
(a) entlang einer Feldfahrgasse (F) im Feldinneren (I) auf ein unter einem Winkel (α) von ungleich 0° und ungleich 90° in Bezug auf diese Feldfahrgasse (F) angeordnetes Vorgewende (V) zu
die sukzessive Verminderung der Drehzahl des jeweiligen Dosierrades der jeweiligen Dosiereinheit unter Berücksichtigung der Latenzzeit, innerhalb welcher das Verteilgut von dem jeweiligen Dosierrad an das jeweilige Verteilorgan überführt wird, spätestens endet, wenn
- eine jeweilige Teilbreite (T_{M}) der Verteilmaschine (M) zumindest die Grenze (G₂) zwischen der sich an die feldinnere Teilbreite (T_{V1}) in Richtung des Feldäußeren anschließenden Teilbreite (T_{V2}) und der sich hieran in Richtung des Feldäußeren anschließenden Teilbreite (T_{V3}) des Vorgewendes (V) gänzlich überschreitet, insbesondere wenn
- eine jeweilige Teilbreite (T_{M}) der Verteilmaschine (M) zumindest die Grenze (G₃) zwischen der - vom Feldinneren (I) her betrachtet - dritten Teilbreite (T_{V3}) und vierten Teilbreite (T_{V4}) des Vorgewendes (V) gänzlich überschreitet;
und/oder
(b) entlang einer Feldfahrgasse (F) von einem unter einem Winkel (α) von ungleich 0° und ungleich 90° in Bezug auf diese Feldfahrgasse (F) angeordneten Vorgewende (V) fort
die sukzessive Erhöhung der Drehzahl des jeweiligen Dosierrades der jeweiligen Dosiereinheit unter Berücksichtigung der Latenzzeit, innerhalb welcher das Verteilgut von dem jeweiligen Dosierrad an das jeweilige Verteilorgan überführt wird, frühestens beginnt, wenn
- eine jeweilige Teilbreite (T_{M}) der Verteilmaschine (M) zumindest die Grenze (G₂) zwischen der sich an die feldinnere Teilbreite (T_{V1}) anschließenden Teilbreite (T_{V2}) und der sich hieran in Richtung des Feldäußeren anschließenden Teilbreite (T_{V3}) des Vorgewendes (V) erreicht, insbesondere wenn
- eine jeweilige Teilbreite (T_{M}) der Verteilmaschine (M) zumindest die Grenze (G₃) zwischen der - vom Feldinneren (I) her betrachtet - dritten Teilbreite (T_{V3}) und vierten Teilbreite (T_{V4}) des Vorgewendes (V) erreicht.

3. Verteilmaschine nach Anspruch 1 oder 2, **dadurch gekennzeichnet, dass** die Teilbreiten (T_{M}) der Verteilmaschine (M) in eine Mehrzahl an in der Steuer- und/oder Regeleinrichtung hinterlegten, virtuellen Teilbreiten unterteilt sind, wobei den virtuellen Teilbreiten sukzessive abgestufte Drehzahlen des jeweiligen Dosierrades der jeweiligen Dosiereinheit zwischen der jeweiligen Soll-Drehzahl und null zugeordnet sind, und wobei die Steuer- und/oder Regeleinrichtung zum sukzessiven Erhöhen bzw. Vermindern der Drehzahl des jeweiligen Dosierrades der jeweiligen Dosiereinheit derart ausgebildet ist, dass die Drehzahl des jeweiligen Dosierrades der jeweiligen Dosiereinheit sukzessive stufenweise erhöht bzw. vermindert wird.

4. Verteilmaschine nach Anspruch 3, **dadurch gekennzeichnet, dass**
- die virtuellen Teilbreiten im Wesentlichen dieselbe Breite besitzen und/oder
- die den virtuellen Teilbreiten zugeordneten, sukzessive abgestuften Drehzahlen des jeweiligen Dosierrades der jeweiligen Dosiereinheit zwischen der jeweiligen Soll-Drehzahl des jeweiligen Dosierrades der jeweiligen Dosiereinheit und null im Wesentlichen gleichmäßig abgestuft sind.

5. Verteilmaschine nach Anspruch 1 oder 2, **dadurch gekennzeichnet, dass** die Steuer- und/oder Regeleinrichtung zum im Wesentlichen kontinuierlichen Erhöhen bzw. Vermindern der Drehzahl eines jeweiligen Dosierrades einer jeweiligen Dosiereinheit zwischen der jeweiligen Soll-Drehzahl und null eingerichtet ist.

6. Verteilmaschine nach einem der Ansprüche 1 bis 5, **dadurch gekennzeichnet, dass** die Steuer- und/oder Regeleinrichtung ferner bei einer Kurvenfahrt der Verteilmaschine (M)
- zum sukzessiven Erhöhen der Drehzahl zumindest eines Dosierrades einer jeweiligen Dosiereinheit, welche zumindest einem kurvenäußeren Verteilorgan oder einer kurvenäußeren Gruppe von Verteilorganen zugeordnet ist, und/oder
- zum sukzessiven Vermindern der Drehzahl zumindest eines Dosierrades einer jeweiligen Dosiereinheit, welche zumindest einem kurveninneren Verteilorgan oder einer kurveninneren Gruppe von Verteilorganen zugeordnet ist,
in Abhängigkeit des Kurvenradius eingerichtet ist.

7. Verteilmaschine nach einem der Ansprüche 1 bis 6, **dadurch gekennzeichnet, dass** sie mit einer Positionserfassungseinrichtung, wie in Form eines GPS-Empfängers, ausgestattet ist, welche mit der Steuer- und/oder Regeleinrichtung in Verbindung steht, wobei die Steuer- und/oder Regeleinrichtung insbesondere ferner zum Abspeichern und/oder Auslesen einer Applikationskarte eingerichtet ist, um die Drehzahl der Dosierräder der Dosiereinheiten in Abhängigkeit der erfassten Position der Verteilmaschine (M) entsprechend der in der Applikationskarte hinterlegten Soll-Verteilmenge pro Flächeneinheit auf die jeweilige Soll-Drehzahl zu steuern und/oder zu regeln.

8. Verfahren zur Steuerung und/oder Regelung der Dosiereinheiten einer pneumatischen Verteilmaschine (M) zum Ausbringen von Verteilgut gemäß dem Oberbegriff des Anspruchs 1 entsprechend einer vorgegebenen Verteilmenge an Verteilgut pro Flächeneinheit, wobei die pneumatische Verteilmaschine (M) entlang von Feldfahrgassen (F) im Feldinneren (I) bewegt wird und die jeweiligen Verteilorgane oder die jeweiligen Gruppen von Verteilorganen durch Rotieren bzw. Stillsetzen des jeweiligen Dosierrades einer jeweiligen Dosiereinheit zu- bzw. abgeschaltet werden, um für eine Teilbreitenschaltung mit einer Mehrzahl an Teilbreiten (T_{M}) der Verteilmaschine (M) zu sorgen, wenn die pneumatische Verteilmaschine (M) entlang einer jeweiligen Feldfahrgasse (F) auf ein Vorgewende (V) zu und/oder von einem Vorgewende (V) fort fährt, **dadurch gekennzeichnet, dass** während der Fahrt der pneumatischen Verteilmaschine (M)
(a) entlang einer Feldfahrgasse (F) im Feldinneren (I) auf ein unter einem Winkel (α) von ungleich 0° und ungleich 90° in Bezug auf diese Feldfahrgasse (F) angeordnetes Vorgewende (V) zu
die Drehzahl eines jeweiligen Dosierrades einer jeweiligen Dosiereinheit, welche dem Verteilorgan oder der Gruppe von Verteilorganen einer jeweiligen Teilbreite (T_{M}) der Verteilmaschine (M) zugeordnet ist, sukzessive zwischen der Soll-Drehzahl und null vermindert wird, wobei die sukzessive Verminderung der Drehzahl des jeweiligen Dosierrades der jeweiligen Dosiereinheit unter Berücksichtigung der Latenzzeit, innerhalb welcher das Verteilgut von dem jeweiligen Dosierrad an das jeweilige Verteilorgan überführt wird, frühestens begonnen wird, wenn eine jeweilige Teilbreite (T_{M}) der Verteilmaschine die Grenze (G) des Vorgewendes (V) zum Feldinneren (I) hin erreicht, und spätestens beendet wird, wenn eine jeweilige Teilbreite (T_{M}) der Verteilmaschine (M) zumindest die Grenze (G₁) zwischen der feldinneren Teilbreite (T_{V1}) und der sich hieran in Richtung des Feldäußeren anschließenden Teilbreite (T_{V2}) des Vorgewendes (V) gänzlich überschreitet; und/oder
(b) entlang einer Feldfahrgasse (F) von einem unter einem Winkel (α) von ungleich 0° und ungleich 90° in Bezug auf diese Feldfahrgasse (F) angeordneten Vorgewende (V) fort
die Drehzahl eines jeweiligen Dosierrades einer jeweiligen Dosiereinheit, welche dem Verteilorgan oder der Gruppe von Verteilorganen einer jeweiligen Teilbreite zugeordnet ist, sukzessive zwischen null und der Soll-Drehzahl erhöht wird, wobei die sukzessive Erhöhung der Drehzahl des jeweiligen Dosierrades der jeweiligen Dosiereinheit unter Berücksichtigung der Latenzzeit, innerhalb welcher das Verteilgut von dem jeweiligen Dosierrad an das jeweilige Verteilorgan überführt wird, frühestens begonnen wird, wenn eine jeweilige Teilbreite (T_{M}) der Verteilmaschine (M) zumindest die Grenze (G₁) zwischen der feldinneren Teilbreite (T_{V1}) und der sich hieran in Richtung des Feldäußeren anschließenden Teilbreite (T_{V2}) des Vorgewendes (V) erreicht, und spätestens beendet wird, wenn eine jeweilige Teilbreite (T_{M}) der Verteilmaschine (M) die Grenze (G) des Vorgewendes (V) zum Feldinneren (I) gänzlich überschreitet.

9. Verfahren nach Anspruch 8, **dadurch gekennzeichnet, dass** während der Fahrt der pneumatischen Verteilmaschine (M)
(a) entlang einer Feldfahrgasse (F) im Feldinneren (I) auf ein unter einem Winkel (α) von ungleich 0° und ungleich 90° in Bezug auf diese Feldfahrgasse (F) angeordnetes Vorgewende (V) zu
die sukzessive Verminderung der Drehzahl des jeweiligen Dosierrades der jeweiligen Dosiereinheit unter Berücksichtigung der Latenzzeit, innerhalb welcher das Verteilgut von dem jeweiligen Dosierrad an das jeweilige Verteilorgan überführt wird, spätestens beendet wird, wenn
- eine jeweilige Teilbreite (T_{M}) der Verteilmaschine zumindest die Grenze (G₂) zwischen der sich an die feldinnere Teilbreite (T_{V1}) in Richtung des Feldäußeren anschließenden Teilbreite (T_{V2}) und der sich hieran in Richtung des Feldäußeren anschließenden Teilbreite (T_{V3}) des Vorgewendes (V) gänzlich überschreitet,
insbesondere wenn
- eine jeweilige Teilbreite (T_{M}) der Verteilmaschine zumindest die Grenze (G₃) zwischen der - vom Feldinneren (I) her betrachtet - dritten Teilbreite (T_{V3}) und vierten Teilbreite (T_{V4}) des Vorgewendes (V) gänzlich überschreitet;
und/oder
(b) entlang einer Feldfahrgasse (F) von einem unter einem Winkel (α) von ungleich 0° und ungleich 90° in Bezug auf diese Feldfahrgasse (F) angeordneten Vorgewende (V) fort
die sukzessive Erhöhung der Drehzahl des jeweiligen Dosierrades der jeweiligen Dosiereinheit unter Berücksichtigung der Latenzzeit, innerhalb welcher das Verteilgut von dem jeweiligen Dosierrad an das jeweilige Verteilorgan überführt wird, frühestens begonnen wird, wenn
- eine jeweilige Teilbreite (T_{M}) der Verteilmaschine zumindest die Grenze (G₂) zwischen der sich an die feldinnere Teilbreite (T_{V1}) anschließende Teilbreite (T_{V2}) und der sich hieran in Richtung des Feldäußeren anschließenden Teilbreite (T_{V3}) des Vorgewendes (V) erreicht,
insbesondere wenn
- eine jeweilige Teilbreite (T_{M}) der Verteilmaschine zumindest die Grenze (G₃) zwischen der - vom Feldinneren (I) her betrachtet - dritten Teilbreite (T_{V3}) und vierten Teilbreite (T_{V4}) des Vorgewendes (V) erreicht.

10. Verfahren nach Anspruch 8 oder 9, **dadurch gekennzeichnet, dass** die Teilbreiten (T_{M}) der Verteilmaschine (M) in eine Mehrzahl an virtuellen Teilbreiten unterteilt werden, wobei den virtuellen Teilbreiten sukzessive abgestufte Drehzahlen des jeweiligen Dosierrades der jeweiligen Dosiereinheit zwischen der jeweiligen Soll-Drehzahl und null zugeordnet werden, und wobei die Drehzahl des jeweiligen Dosierrades der jeweiligen Dosiereinheit sukzessive stufenweise erhöht bzw. vermindert wird.

11. Verfahren nach Anspruch 10, **dadurch gekennzeichnet, dass**
- die Teilbreiten (T_{M}) der Verteilmaschine (M) in eine Mehrzahl an virtuellen Teilbreiten unterteilt werden, welche im Wesentlichen dieselbe Breite besitzen und/oder
- die den virtuellen Teilbreiten zugeordneten, sukzessive abgestuften Drehzahlen des jeweiligen Dosierrades der jeweiligen Dosiereinheit zwischen der jeweiligen Soll-Drehzahl des jeweiligen Dosierrades der jeweiligen Dosiereinheit und null im Wesentlichen gleichmäßig abgestuft werden.

12. Verfahren nach Anspruch 8 oder 9, **dadurch gekennzeichnet, dass** die Drehzahl eines jeweiligen Dosierrades einer jeweiligen Dosiereinheit im Wesentlichen kontinuierlich zwischen der jeweiligen Soll-Drehzahl und null erhöht bzw. vermindert wird.

13. Verfahren nach einem der Ansprüche 8 bis 12, **dadurch gekennzeichnet, dass** während des Anlegens des Vorgewendes (V) zumindest das Dosierrad der Dosiereinheit, welches dem dem Feldinneren (I) zugewandten Verteilorgan oder der dem Feldinneren (I) zugewandten Gruppe von Verteilorganen zugeordnet ist, auf eine gegenüber der Soll-Drehzahl verminderte Drehzahl gesteuert und/oder geregelt wird, um zumindest auf die dem Feldinneren (I) zugewandte Teilbreite (T_{V1}) des Vorgewendes (V) eine gegenüber der Soll-Verteilmenge pro Flächeneinheit verminderte Verteilgutmenge aufzubringen.

14. Verfahren nach Anspruch 13, **dadurch gekennzeichnet, dass** während des Anlegens des Vorgewendes (V)
- zumindest die beiden Dosierräder der Dosiereinheit, welche den beiden dem Feldinneren (I) zugewandten Verteilorganen oder den beiden dem Feldinneren (I) zugewandten Gruppen von Verteilorganen zugeordnet sind, auf je eine gegenüber der Soll-Drehzahl verminderte Drehzahl gesteuert und/oder geregelt werden,
wobei insbesondere
- zumindest die drei Dosierräder der Dosiereinheit, welche den drei dem Feldinneren (I) zugewandten Verteilorganen oder den drei dem Feldinneren zugewandten Gruppen von Verteilorganen zugeordnet sind, auf je eine gegenüber der Soll-Drehzahl verminderte Drehzahl gesteuert und/oder geregelt werden,
um zumindest auf den beiden dem Feldinneren (I) zugewandten Teilbreiten (T_{V1}, T_{V2}) des Vorgewendes (V), insbesondere zumindest auf den drei dem Feldinneren (I) zugewandten Teilbreiten (T_{V1}, T_{V2}, T_{V3}) des Vorgewendes (V), eine gegenüber der Soll-Verteilmenge pro Flächeneinheit verminderte, vom Feldäußeren in Richtung des Feldinneren (I) abnehmende Verteilgutmenge aufzubringen.

15. Verfahren nach einem der Ansprüche 8 bis 14, **dadurch gekennzeichnet, dass** ferner bei einer Kurvenfahrt der Verteilmaschine (M)
- die Drehzahl zumindest eines Dosierrades einer jeweiligen Dosiereinheit, welche zumindest einem kurvenäußeren Verteilorgan oder einer kurvenäußeren Gruppe von Verteilorganen zugeordnet ist, in Abhängigkeit des Kurvenradius sukzessive erhöht wird, und/oder
- die Drehzahl zumindest eines Dosierrades einer jeweiligen Dosiereinheit, welche zumindest einem kurveninneren Verteilorgan oder einer kurveninneren Gruppe von Verteilorganen zugeordnet ist, in Abhängigkeit des Kurvenradius sukzessive vermindert wird.

16. Verfahren nach einem der Ansprüche 8 bis 15, **dadurch gekennzeichnet, dass** die Position der Verteilmaschine (M) mittels einer Positionserfassungseinrichtung, wie in Form eines GPS-Empfängers, ermittelt und die Drehzahl der Dosierräder der Dosiereinheiten in Abhängigkeit der erfassten Position der Verteilmaschine, insbesondere entsprechend der in einer Applikationskarte hinterlegten Soll-Verteilmenge pro Flächeneinheit, auf die jeweilige Soll-Drehzahl gesteuert und/oder geregelt wird.
